# EUROPEAN PATENT SPECIFICATION

(11) **EP 2 067 759 B1**
(45) Date of publication and mention of the grant of the patent: **16.04.2014**
(21) Application number: 08166140.7
(22) Date of filing: 08.10.2008
(51) Int. Cl.: C04B 41/45, C04B 41/52, E04C 2/06, B01J 35/00

(54) **Coating material, building material and method for coating building material**
Beschichtungsmaterial, Baumaterial und Verfahren zum Beschichten von Baumaterial
Matériau de revêtement, matériau de construction et procédé pour le revêtement du matériau de construction

(30) Priority: 04.12.2007 JP 2007313602
(43) Date of publication of application: 10.06.2009
(73) Proprietor: Nichiha Corporation, Nagoya-shi, Aichi 455-8550 (JP)
(72) Inventor: IMAI, Toshio, Yokosuka-shi Aichi 238-0022 (JP); TAKAHASHI, Toshifumi, Kakamigahara-shi Gifu 504-0912 (JP); HIBINO, Yoshinori, Ama-gun Aichi 490-1144 (JP)
(74) Representative: Isarpatent

(56) References cited:
- EP-A1- 1 118 385
- US-A1- 2005 266 981
- DATABASE WPI Week 200444 Thomson Scientific, London, GB; AN 2004-462729 XP002686897, & JP 2004 107437 A (NIPPON LIGHT METAL CO) 8 April 2004 (2004-04-08)
- DATABASE WPI Week 200607 Thomson Scientific, London, GB; AN 2006-062276 XP0026447841, & JP 2006 008902 A (SAKURAMIYA KAGAKU KK) 12 January 2006 (2006-01-12)
- DATABASE WPI Week 200801 Thomson Scientific, London, GB; AN 2008-A10319 XP002686899, & KR 2007 0029377 A (DAEJOO ELECTRONIC MATERIALS CO LTD) 14 March 2007 (2007-03-14)
- DATABASE WPI Week 200806 Thomson Scientific, London, GB; AN 2008-A92312 XP002686900, & KR 2007 0009035 A (TAEYANG ELECTRONICS CO LTD) 18 January 2007 (2007-01-18)

## Description

### FIELD OF THE INVENTION

The present invention relates to a method for coating a building material, in which a photocatalyst-containing coating film is formed on the surface of a building material used, for example, for the exterior wall material, the interior wall material, the roof material or the floor material of a structure such as a residence or a building. The present invention also relates to a coating material and a building material.

### DESCRIPTION OF RELATED ART

Conventionally, building materials including, for example, ceramic engineering building materials using cement as a principal component, such as ALC panels, wood fiber reinforced cement boards and glass fiber-reinforced cement boards; composite board materials obtained by reinforcing rubber, resin, metal, ceramics and the like with glass fiber; fiber boards such as particle boards and insulation boards; and wooden board are used for the exterior wall material, the interior wall material, the roof material or the floor material of structures such as residences and buildings. With regard to the building materials used for the exterior materials, it is known to provide the surface of an exterior material with hydrophilicity so that soil or the like adhering to the surface of the coating film of the exterior material can be washed off by rainwater or the like which attaches to the exterior material during rainfall and the like, thereby providing an anti-staining effect against environmental pollution (for example, see JP 3847048 B).

Meanwhile, in recent years, there have been attempts to apply coating materials containing various kinds of hydrophilic polymers in order to provide building materials with an anti-staining effect. Since building materials generally are often stacked one upon another during storage or transportation, such a coating material should, after its application, be able to dry comparatively easily without leaving any stickiness and should have weather resistance over a long period of time. At present, methyl silicate, water glass, colloidal silica, poly(meth)acrylic acid and polytetrafluoroethylene (PTFE) obtained by graft polymerization of sulfonic acid, for example, are available as hydrophilic polymers that may satisfy these conditions.

However, even if such a hydrophilic polymer is applied to the surface of a building material, it can only provide an anti-staining effect, and cannot provide mildewproofing, deodorization, antibacterial properties, an air cleaning effect and the like.

With the recent increase in awareness of environmental improvement, there is a demand for building materials with various functions relating to environment, such as mildewproofing, deodorization, antibacterial properties and air purification, in addition to an anti-staining effect.
Therefore, it is conceivable to apply a hydrophilic polymer containing a substance that may exert these functions to building materials, As such a substance, a photocatalyst is the most preferred at present. However, methods using known photocatalysts have the following fatal problems. That is, a photocatalytic coating film may contain a photocatalyst at a very high concentration in order to promote the photocatalytic reaction on the surface of the coating film efficiently. The purpose of this is to increase the amount of an exposed portion of the photocatalyst on the surface since only the exposed portion participates in the reaction. However, in the case of using the photocatalyst at such a high concentration that the photocatalyst is exposed on the surface, the photocatalyst is present also on the rear surface (i.e., the surface in contact with the surface of the underlying base material or another coating film). Accordingly, a photocatalytic reaction, which is a violent oxidation reaction that should take place on the front surface, will occur also on the rear surface. Consequently, the surface of the underlying base material (or another coating film) in contact with that rear surface will deteriorate in the oxidation reaction, resulting in deterioration phenomena such as detachment of the photocatalytic coating film and chalking on the base material surface (such undesirable phenomena are referred to as "rear reaction" of the photocatalytic coating film). Therefore, prior to application of the coating material containing a photocatalyst, a barrier coat needs to be additionally applied for protecting the underlying base material from such rear reaction. Consequently, the amount of labor and cost increases, and the equipment and the space for the additional process are also needed. Further, since hydrophilicity will manifest only after light irradiation, it is difficult to conduct an outgoing inspection for hydrophilicity at the time of manufacture and shipment. Furthermore, since building materials are often stacked on one another during storage and transportation, etc., they may be damaged, for example scratched, at the time of handling. Moreover, since the photocatalytic reaction occurs on the surface of building materials, it is difficult to perform repair coating.

US2005266981 discloses liquid compositions that include a photocatalytic material and a hydrophilic binder that includes an essentially completely hydrolyzed organosilicate. Also disclosed are methods of making such compositions, methods of coating a substrate with a hydrophilic composition, and substrates coated with such compositions. The compositions may, for example, be embodied as stable one-pack compositions. The photocatalytic material may be titania sol.

EP1118385 discloses a method and an apparatus which can efficiently produce a functional material having a satisfactory level of photocatalytic activity. A photocatalyst coating composition comprising a photocatalytic metal oxide and/or a precursor of the photocatalytic metal oxide is coated on the surface of a substrate. The use of titanium oxide sol is described.

JP2004107437 describes a composition for forming hydrophilic coatings on building materials comprising apatite coated titanium oxide sol and silica sol.

JP2006008902 discloses a composition for forming hydrophilic coatings on building materials comprising apatite coated titanium oxide microparticles and reactive silica microparticles derived from methyl silicate.

KR20070029377 teaches a hydrophilic photocatalyst sol, which is mixed with a tetramethyl orthosilicate binder.

KR20070009035 discloses a hydrophilic coating agent which is a mixture of a titanium dioxide sol and a silicon dioxide sol.

The present invention was made in view of the foregoing problems, and it is an object of the invention to provide a method for coating a building material for forming a photocatalyst-containing coating film that exhibits an anti-staining function due to its excellent hydrophilicity, and has various functions relating to environment, such as mildewproofing, deodorization, antibacterial properties and air purification.

### SUMMARY OF THE INVENTION

In order to achieve the above object, a method for coating a building material according to a first aspect of the invention is a method for coating a building material according to claim 1, including: applying a coating material containing a hydrophilic polymer and a photocatalyst to a surface of the building material; and drying the coating material to form a photocatalyst-containing coating film, wherein the hydrophilic polymer is polytetrafluoroethylene obtained by graft polymerization of sulfonic acid, the photocatalyst is a titania sol or the photocatalyst is selected from the group consisting of titanium oxide surface-coated with zeolite, titanium oxide surface-coated with silica, titanium oxide surface-coated with apatite, and mixtures of two or more thereof, and the content of the photocatalyst in the coating film is 10 to 50 parts by mass in terms of titanium oxide per 100 parts by mass of the hydrophilic polymer, and the coating film has a stationary contact angle or a dynamic receding contact angle of not more than 30° in a non-photoexcited state, and has a methylene blue decomposition activity index of at least 3.0. As the aforementioned coating material, it is preferable to use a coating material with excellent permeability.

"Stationary contact angle" refers to a contact angle of the interface between a horizontally fixed coating film and 2 µl of water dropped on the surface of the coating film. "Dynamic contact angle" is determined as follows. 2 µl of water is first dropped on the surface of a horizontally fixed coating film, and additional 4 µl of water is dropped after a lapse of one minute. The additional 4 µl of water is sucked after elapse of another minute, and the contact angle of the interface between the coating film and the water is measured as a dynamic contact angle after elapse of another minute. The stationary and dynamic contact angles are used as typical measures that can represent the hydrophilicity of the coating film as reproducible numerical values. According to the research of the present inventors, a sufficient effect could be achieved when either the stationary contact angle or the dynamic contact angle of the coating film was not more than 30°, so that this numerical value is used as a threshold value in the present invention.

"Methylene blue decomposition activity index" refers to a decomposition activity index defined in JIS R1703-2, and is used in the invention as a typical measure that can represent the photocatalytic effects such as deodorization, antibacterial properties and air purification as a reproducible numerical value. Methylene blue undergoes very little deterioration by light irradiation, and selectively reacts with radicals (free radicals), and therefore has a property of decolorizing rapidly upon generation of radicals during a photocatalytic reaction. Since mildewproofing, deodorization, antibacterial properties and an air cleaning effect, which are considered as the effects of the photocatalytic reaction, are all caused by the generated radicals, there is a close correlation between the decomposition of methylene blue and these effects. Therefore, the methylene blue decomposition activity index is adopted herein as a well reproducible index for evaluating the photocatalytic effect to express the presence or absence of the photocatalytic effect. Although a threshold value (numerical value) for evaluating the presence or absence of the effect of a photocatalyst is not prescribed at present, according to the research of the present inventors, a sufficient effect could be achieved when the methylene blue decomposition activity index of the coating film was at least 3.0, so that this numerical value is used as the threshold value in the present invention.

In the present method, a coating material containing a hydrophilic polymer being polytetrafluoroethylene obtained by graft polymerization of sulfonic acid and a titania sol is applied, and the coating material is dried to form a photocatalyst-containing coating film. Accordingly, the hydrophilicity of the surface of this coating film is not achieved by the photocatalyst, but by the hydrophilic polymer, and the hydrophilicity is retained also in a non-photoexcited state. Therefore, the present method is different from a conventional ordinary method, i.e., a method in which a photocatalytic coating material composed of a mixture of a photocatalyst and a polymer is applied, and the coating material is dried to form a coating film whose surface is provided with hydrophilicity by photoexcitation of the photocatalyst. In the present method, the stationary contact angle or the dynamic receding contact angle of the coating film in a non-photoexcited state is not more than 30°, so that an excellent anti-staining function is provided even in a non-photoexcited state. Further, while a titania sol, which is highly reactive, is used for the photocatalyst to obtain mildewproofing, deodorization, antibacterial properties and an air cleaning effect from this photocatalyst, the rear reaction can be prevented by reducing the content of this photocatalyst in the coating film to 10 to 50 parts by mass in terms of titanium oxide per 100 parts by mass of the hydrophilic polymer. In addition, since the methylene blue decomposition activity index of the coating film is at least 3.0, mildewproofing, deodorization, antibacterial properties and an air cleaning effect can be achieved sufficiently.

Also, according to the present method, a coating material containing a hydrophilic polymer being polytetrafluoroethylene obtained by graft polymerization of sulfonic acid, and a photocatalyst is applied, and the coating material is dried to form a photocatalyst-containing coating film. Accordingly, the present method is the same as the method according to the first aspect of the invention in that it is different from a conventional ordinary method since the hydrophilicity of the surface of this coating film is not achieved by the photocatalyst, but by the hydrophilic polymer, and that it provides an excellent anti-staining effect since the static contact angle or dynamic receding contact angle of the coating film in a non-photoexcited state is not more than 30°. However, the present method uses, as the photocatalyst, at least one selected from titanium oxide surface-coated with zeolite, titanium oxide surface-coated with silica, titanium oxide surface-coated with apatite and mixtures thereof to achieve mildewproofing, deodorization, antibacterial properties and an air cleaning effect from this photocatalyst, while preventing the photocatalyst from causing the rear reaction. That is, a commonly used photocatalyst is made of fine particles of anatase type titanium oxide, and is in a state in which the photocatalyst is exposed on the surface, so to speak. Of course, the photocatalytic reaction herein takes place on the exposed surface, so that if a highly reactive oxide is generated, the oxide causes decomposition and hence degradation of the organic substances located in the vicinity thereof. Accordingly, in a state in which the photocatalyst is dispersed in the same manner in which a pigment is dispersed in a general-purpose coating material, for example, the organic polymer of the binder will be decomposed by the photocatalyst. Therefore, the surface of the photocatalyst is coated with an inactive substance such as minute silica, zeolite and apatite so that the inactive substance on the surface can serve as a buffer material, which separates the organic polymer from the photocatalyst, preventing the organic polymer from being decomposed. Further, if this buffer material has the shape of a needle (whisker) or a lattice rather than a film, the buffer material will have a larger surface area, and serves the function of not only the buffer material, but also an adsorbing function, which is especially required for achieving deodorization or an air cleaning effect, and thus will contribute to these effects further. That is, this enables a process in which an inactive substance with an absorption function covers the surface of the photocatalyst, and a toxic substance adsorbed there is gradually decomposed by the photocatalyst located nearby, thereby achieving the photocatalytic effects such as deodorization, antibacterial properties and air purification, without causing decomposition of the organic polymer. Simultaneously, since the neighboring organic substance will not be decomposed, it is considered that the anti-staining effect will hardly occur, or will not occur at all. Examples of many patents relating to this include JP 3975270 B and JP 3488496 B. In addition, since the methylene blue decomposition activity index of the coating film is at least 3.0, mildewproofing, deodorization, antibacterial properties and an air cleaning effect are achieved sufficiently.

In an embodiment of the method for coating a building material of the invention, the coating material contains 0.01 to 5 mass% of a surfactant as an active ingredient. As the surfactant, any of an anionic surfactant and a nonionic surfactant and a cationic surfactant that are commonly used may be used, and a mixture of two or more of these surfactants may be used.

An aqueous coating material tends to be repelled by a water-repellent surface so that it cannot be applied uniformly. Therefore, unless the surface tension of the water-repellent surface is reduced, it is difficult to form a uniform coating film, and the hydrophilicity and the photocatalytic effects on the surface of the resulting coating film will be impaired. In the present method, 0.01 to 5 mass% of the surfactant is included in the coating material as an active ingredient according to claim 1 or 2 of the invention to reduce the surface tension of the coating material, thereby increasing the affinity with the surface of the underlying base material (or another coating film). Consequently, the adhesion between the resulting coating film and the underlying base material can be improved. It should be noted that if the active ingredient of the surfactant added is less than 0.01 mass%, the effect of the surfactant cannot be achieved sufficiently. On the other hand, increasing the active ingredient of the surfactant added to more than 5 mass% will not achieve a further improvement of the effect of the surfactant, and only leads to cost increase due to a high price of the surfactant.

A method according to a further embodiment of the present invention is the method for coating a building material, wherein the coating material contains 1 to 80 mass % of an alcohol. Particularly preferably, 5 to 80 mass% of an alcohol is contained.

An aqueous coating material tends to be repelled by a water-repellent surface so that it cannot be applied uniformly. Therefore, unless the surface tension of the water-repellent surface is reduced, it is difficult to form a uniform coating film, and the hydrophilicity and the photocatalytic effects on the surface of the resulting coating film will be impaired. In the present method, 1 to 80 mass% of the alcohol is included in the coating material according to any of the first to third aspect of the invention to reduce the surface tension of the coating material as in the case of the surfactant, thereby increasing the affinity with the surface of the underlying base material (or another coating film). Consequently, the adhesion between the resulting coating film and the underlying base material can be improved. It should be noted that if the alcohol added is less than 1 mass%, the effect of the alcohol cannot be achieved sufficiently. On the other hand, increasing the alcohol added to more than 80 mass% will not achieve a further improvement of the effect of the alcohol, and only leads to cost increase.

Preferably, the thickness of the coating film is 0.1 to 3 µm. More preferably, the thickness is 1 to 2 µm. Increasing the thickness of the coating film to 0.1 to 3 µm reduces the surface resistance value of the coating film, thereby preventing dust or soil from attaching to the surface of the coating film and protecting the surface of the underlying base material (or another coating film) in contact with the coating film over a long period of time. Accordingly, coating thinning, which is a phenomenon of depletion of the surface of the underlying base material over time, tends not to occur, providing the building material with high weather resistance. Decreasing the thickness of the coating film to less than 0.1 µm will not provide a surface resistance value of the coating film that is small enough to prevent dust or soil from attaching, and will not achieve a sufficient protection for the surface of the underlying base material, so that coating thinning tends to occur. On the other hand, increasing the thickness of the coating film to larger than 3 µm makes it difficult to apply the coating film uniformly and cannot improve the effects further, leading only to cost increase.

With the method for coating a building material according to the present invention, it is possible to provide a building material that has good hydrophilicity, excellent self-cleaning effect and anti-staining effect such that any soil adhered thereto can be washed off by rainwater and the like, as well as excellent mildewproofing, deodorization, antibacterial properties and air cleaning effect. Further, since the method for coating a building material according to the present invention will not cause the rear reaction by the photocatalyst of the coating film, it is not necessary to apply a barrier coat, which is a protective layer, as the underlying layer, thereby simplifying the manufacturing process. This makes it possible to manufacture the building material easily in a large quantity, and reduce the manufacturing cost. Moreover, since the coating film on the base material surface exerts its hydrophilicity without being irradiated with light, it is possible to conduct the inspection for the presence or absence of hydrophilicity at the time of manufacture or shipment. At the same time, even if any fault such as partial damage to the surface coating film occurs, it is possible to apply the coating material in a simple manner for repair purpose.

### DETAILED DESCRIPTION OF THE INVENTION

Hereinafter, a method for coating a building material according to the present invention will be explained.

The hydrophilic polymer of the coating material of the method for coating a building material according to the present invention is polytetrafluoroethylene obtained by graft polymerization of sulfonic acid. These hydrophilic polymer can impart other properties such as adhesion properties and plasticity. Further, as long as the hydrophilicity is not inhibited, the hydrophilic polymer can be mixed with any known resins that form a water-repellent film and used as building materials, including, for example, acrylic resin, polyester resin, silicon-modified acrylic resin, silicon resin and fluororesin.

It was found that, in order to achieve mildewproofing, deodorization, antibacterial properties and an air cleaning effect by the photocatalyst, rather than the self-cleaning (anti-staining and anticontamination) effect, it is necessary not only to cause a photocatalytic reaction efficiently, but also to provide the function of adsorbing a toxic substance on the surface of the photocatalyst. Since photocatalysts have poor dispersibility, these effects cannot be achieved by a method in which a general-purpose photocatalyst with a small specific surface area is dispersed. This can be solved by including a titania sol, which has extremely favorable dispersibility, in a concentration range that does not cause the rear reaction, or such that the content of the photocatalyst in the resulting coating film is 10 to 50 parts by mass in terms of titanium oxide per 100 parts by mass of the hydrophilic polymer. Alternatively, this can also be solved by using titanium oxide having an adsorption layer on its surface, such as titanium oxide surface-coated (-modified) with zeolite, titanium oxide surface-coated (-modified) with silica or titanium oxide surface-coated (-modified) with apatite.

Further, according to the present invention, it is preferable to add a surfactant to the coating material containing a hydrophilic polymer and a photocatalyst. As the surfactant to be added, any of an anionic surfactant, a nonionic surfactant and a cationic surfactant that are commonly used may be used. Examples of the anionic surfactant include higher alcohol sulfate (Na salt or amine salt), alkyl allyl sulfonate (Na salt or amine salt), alkyl naphthalene sulfonate (Na salt or amine salt), an alkyl naphthalene sulfonate condensate, alkyl phosphate, dialkyl sulfosuccinate, rosin soap and fatty acid salt (Na salt or amine salt). Examples of the nonionic surfactant include polyoxyethylene alkyl ether, polyoxyethylene alkylphenol ether, polyoxyethylene alkyl ester, polyoxyethylene alkylamine, polyoxyethylene alkylol amine, polyoxyethylene alkylamide, sorbitan alkyl ester and polyoxyethylene sorbitan alkyl ester. Examples of the cationic surfactant include octadecylamine acetate, imidazoline derivative acetate, a polyalkylene polyamine derivative or its salt, octadecyltrimethylammonium chloride, trimethyl aminoethyl alkylamide halogenide, alkyl pyridinium sulfate and alkyltrimethylammonium halogenide. Two or more of these surfactants may also be mixed for use. The surfactants listed above are merely examples, and the surfactant used for the present invention is not limited to these examples. By including 0.01 to 5 mass% of a surfactant as listed above as an active ingredient, it is possible to reduce the surface tension of the coating material and improve the affinity with the underlying base material (or another coating film) in contact with the surfactant.

Further, according to the present invention, it is preferable to add an alcohol to the coating material containing a hydrophilic polymer and a photocatalyst. Examples of the alcohol to be added include lower alcohols such as methyl alcohol, ethyl alcohol, isopropyl alcohol, butyl alcohol and normal propyl alcohol, and higher alcohols such as hexyl alcohol, pentyl alcohol and octanol. Two or more of these alcohols may be mixed for use. The alcohols listed above are merely examples, and the alcohol used for the present invention is not limited to these examples. Further, to the above-listed alcohols, it is possible to add, for example, glycol-based solvents such as ethylene glycol, diethylene glycol, triethylene glycol, propylene glycol and dipropylene glycol; glycol ether-based solvents such as ethylene glycol monomethyl ether, ethylene glycol monoethyl ether, ethylene glycol monobutyl ether, ethylene glycol monohexyl ether, propylene glycol monomethyl ether, propylene glycol monoethyl ether, propylene glycol monobutyl ether and propylene glycol monohexyl ether; and ester-based solvents such as ethylene glycol monobutyl ether acetate and diethylene glycol monobutyl acetate. When 1 to 80 mass% of an alcohol as listed above is included an active ingredient, the alcohol reduces the surface tension of the coating material and improves the affinity with the surface of the underlying base material (or another coating film) in contact therewith. Further, by mixing two or more of the alcohols (e.g., mixing a lower alcohol and a higher alcohol), it is possible to adjust the drying properties of the coating film.

According to the present invention, the above-described coating material containing a hydrophilic polymer and a photocatalyst is applied to the surface of a building material, for example, by any of the following methods: a spraying method in which a coating material is sprayed from a nozzle provided at the tip of a sprayer; a flow coater method in which a coating material is overflown in the form of a curtain from the side wall of a coating material pool, and an object to be coated is passed under the coating material curtain; a roll coater method in which a part of the surface of a rotating roll coater is immersed in a coating material pool so that the coating material is attached to the roll surface, and the coating material is transferred via the roll; a brush coating method in which an object to be coated is stroked with a brush to which a coating material is attached; an electrostatic spray coating method in which a grounded object to be coated is used as an anode and a coating atomization device as a cathode, and a high negative voltage is applied across them to generate an electrostatic field between the two poles so that atomized coating particles are negatively charged, thereby allowing the object to be coated, which is the opposite pole, to adsorb the coating material effectively; a bell coating method in which a coating material is supplied to a bell-shaped part (bell) capable of rotating at high speed and provided at the tip of an apparatus, the coating material is then transferred with centrifugal force to the edge of the bell, where it is microatomized and charged, and caused to fly to the surface of an object to be coated; and a rotary spray coating method in which a coating material is injected from an injection nozzle that circles around a substantially horizontal orbit placed above the transfer path. Then, the applied coating material is dried to form a photocatalyst-containing coating film on the surface of the building material. Preferably, preheating is performed for the building material at 40 to 100°C prior to the application of the coating material. More preferably, preheating is performed at 50 to 80°C. The drying may be performed at room temperature, by heating with a drier, or by supplying the air onto the surface of the building material. Further, it is preferable to apply the coating material so that the thickness of the coating film is 0.1 to 3 µm.

The coating film formed on the surface of the building material in the above described manner has an excellent anti-staining function even in a non-photoexcited state, since the stationary contact angle or the dynamic receding contact angle of the coating film in a non-photoexcited state is not more than 30°. The coating film also has sufficient mildewproofing, deodorization, antibacterial properties and air cleaning effect since the methylene blue decomposition activity index is at least 3.0. Further, by increasing the thickness of the coating film to 0.1 to 3 µm, the surface resistance value of the coating film is decreased, so that dust or soil tends not to attach to the surface of the coating film. At the same time, the surface of the underlying base material (or another coating film) in contact with the coating film is protected over a long period of time. Accordingly, coating thinning, which is a phenomenon of depletion of the surface of the underlying base material over time, tends not to occur, providing the building material with high weather resistance.

Furthermore, in accordance with a further aspect of the present invention, a coating material is provided that contains a hydrophilic polymer and a photocatalyst, wherein the hydrophilic polymer is polytetrafluoroethylene obtained by graft polymerization of sulfonic acid and wherein the photocatalyst is a titania sol, or the photocatalyst is selected from the group consisting of titanium oxide surface-coated with zeolite, titanium oxide surface-coated with silica, titanium oxide surface-coated with apatite, and mixtures of two or more thereof.

The coating material may contain 0.01 to 5 mass% of a surfactant as an active ingredient. Furthermore, the coating material may contain 1 to 80 mass % of an alcohol.

A building material in accordance with a further aspect of the present invention has been coated according any of the above-described methods or has been coated with any of the above-described coating materials.

### Examples

Examples of the method for coating a building material according to the present invention will be described in detail below.

### Example 1 (not according to the invention)

Using methyl silicate as a hydrophilic polymer (component), and a titania sol as a photocatalyst, a coating material of the present invention was prepared by including the photocatalyst in the hydrophilic polymer such that the mass ratio of the hydrophilic polymer:photocatalyst was 100:10.

The specific mixing ratio (mass%) was as follows.

| | |
|---|---|
| Methyl silicate (trade name "MS57" manufactured by Mitsubishi Chemical Corporation) | 3 |
| Titania sol (trade name "STS (trademark)-100" manufactured by Ishihara Sangyo Kaisha, Ltd.) | 1.8 |
| Hardening accelerator catalyst "1% solution of dibutyltin diacetate" | 0.2 |
| Water | 80 |
| Methanol | 15 |

It can be assumed that the mass of "MS 57" will be decreased to approximately 60% by a dealcoholization reaction resulting from drying, and the nonvolatile content of "STS (trademark)-100" is 10%. Accordingly, the above-described mixing ratio will give a mass ratio of 100:10.

A base material for verifying the anti-staining effect in the present invention was produced by applying an aqueous styrene-acrylic coating material (for coloring) to the surface of a fiber-reinforced cement board having the shape of a rectangle of 50 mm x 40 mm. The base material was toned to "CN-95" specified in "Standard Paint Colors (pocket type)" issued by The Japan Paint Manufacturers Association.

An anti-staining treating solution (i.e., the coating material made of a hydrophilic polymer containing a photocatalyst) having the mixing ratio shown in Example 1 was applied to the thus prepared base material at 50 g/m², and the whole was dried at a temperature of 60C° for 20 minutes, and subjected to testing.

### Example 2 (not according to the invention)

A coating material of the present invention was prepared using methyl silicate as a hydrophilic polymer (component) and a titania sol as a photocatalyst such that the mass ratio of the hydrophilic polymer:photocatalyst was 100:50.

The specific mixing ratio was as follows.

| | |
|---|---|
| Methyl silicate (trade name "MS57" manufactured by Mitsubishi Chemical Corporation) | 3 |
| Titania sol (trade name "STS (trademark)-100" manufactured by Ishihara Sangyo Kaisha, Ltd.) | 9 |
| Hardening accelerator catalyst "1% solution of dibutyltin diacetate" | 0.2 |
| Water | 72.8 |
| Methanol | 15 |

The sample was produced in the same manner as in Example 1.

### Example 3 (according to the invention)

A coating material of the present invention was prepared using polytetrafluoroethylene obtained by graft polymerization of sulfonic acid as a hydrophilic polymer (component) and titanium oxide surface-coated (-modified) with apatite as a photocatalyst.

The specific mixing ratio (mass%) was as follows.

| | |
|---|---|
| Polytetrafluoroethylene obtained by graft polymerization of sulfonic acid ("20% Nafion (trademark) DE2020" manufactured by DuPont U.S.A.) | 8 |
| Apatite-modified titanium oxide (trade name "NTB (trademark)-100" manufactured by Showa Denko K.K.) | 2 |
| Water | 75 |
| Methanol | 15 |

The sample was produced in the same manner as in Example 1.

### Example 4 (according to the invention)

As an example using a surfactant in place of the alcohol-based solvent, a coating material of the present invention was prepared as follows.

The specific mixing ratio (mass%) was as follows.

| | |
|---|---|
| Polytetrafluoroethylene obtained by graft polymerization of sulfonic acid ("20% Nafion (trademark) DE2020" manufactured by DuPont U.S.A.) | 8 |
| Apatite-modified titanium oxide (trade name "NTB (trademark)-100" manufactured by Showa Denko K.K.) | 2 |
| Water | 89 |
| Surfactant (trade name "Polyflow KL600" manufactured by Kyoeisha Chemical Co., Ltd.) | 1 |

The sample was produced in the same manner as in Example 1.

### Comparative Example 1

A sample was prepared using the same mixing ratio as in Example 1 above, except that the photocatalyst was replaced with water. The sample was produced in the same manner as in Example 1 above.

### Comparative Example 2

A sample was prepared using the same mixing ratio as in Example 3 above, except that the photocatalyst was replaced with water. The sample was produced in the same manner as in Example 1.

### Comparative Example 3

As an example using a conventional photocatalyst, a commonly used photocatalytic coating liquid was prepared using ethyl silicate as a polymer component and photocatalyst powder as a photocatalyst such that the mass ratio of the former to the latter was 100:60.

The specific mixing ratio (mass%) was as follows.

| | |
|---|---|
| Ethyl silicate (trade name "ethyl silicate 48" manufactured by COLCOAT) | 4 |
| Photocatalyst powder (trade name "ST-01" manufactured by Ishihara Sangyo Kaisha, Ltd.) | 1.2 |
| Hardening accelerator catalyst "1% solution of dibutyltin dilaurate" | 0.1 |
| Isopropanol | 96 |

It can be assumed that the mass of "Ethyl silicate 48" will be decreased to approximately 48% by a dealcoholization reaction resulting from drying, and the nonvolatile content of "ST-01" is 100%. Accordingly, the above-described mixing ratio will give a mass ratio of 100:60. The sample was produced in the same manner as in Example 1 above.

### Comparative Example 4

A sample was prepared in the same manner as in Example 4 above, except that the surfactant of Example 4 was replaced with water. This serves as an example containing no alcohol-based solvent and no surfactant as its components. The sample was produced in the same manner as in Example 1 above.

The test results are shown in Table 1 below.

**[Table 1]**

| | Ex. 1 | Ex. 2 | Ex. 3 | Ex. 4 | Com. Ex. 1 | Com. Ex. 2 | Com. Ex. 3 | Com. Ex. 4 |
|---|---|---|---|---|---|---|---|---|
| Contact angle with water in non-photoexcited state | 30° | 30° | 25° * | 25° * | 30° | 25° * | 86° | 90° * |
| Decomposition activity index | 6.0 | 12.0 | 11.6 | 11.6 | 0.0 | 0.0 | 12.0 | 2.0 |
| Presence or absence of rear reaction | Absent | Absent | Absent | Absent | Absent | Absent | Present | Absent |
| Self-cleaning effect | 0.3 | 0.2 | 0.3 | 0.3 | 0.3 | 0.3 | 2.0 | 4.1 |
| Antibacterial properties test | 3.0 | 4.2 | 3.5 | 4.0 | 0.0 | 0.0 | 3.0 | 0.5 |
| NOₓ removal | 0.6 | 0.8 | 0.5 | 0.6 | 0.0 | 0.0 | 0.6 | 0.1 |

| | | | | | | | | |
|---|---|---|---|---|---|---|---|---|
| Note that those figures with the notation "*" in "Contact angle with water in non-excited state" show the test results for the dynamic receding contact angle, and the remainder shows the test results for the stationary contact angle. | | | | | | | | |

### Measurement of contact angle with water in non-excited state

In Examples 1 and 2, and Comparative Examples 1 and 3, the stationary contact angle was measured as the contact angle with water in a non-photoexcited state. The stationary contact angle was measured as follows. 2 µl of water was dropped onto the surface of the horizontally fixed samples, and the contact angle of the interface between the water and the surface was measured immediately thereafter.

On the other hand, in Examples 3 and 4, and Comparative Examples 2 and 4, the dynamic receding contact angle was measured as the contact angle with water in a non-photoexcited state. The dynamic receding contact angle was measured as follows. First, 2 µl of water was dropped onto the surface of the horizontally fixed samples, and 4 µl of water was additionally dropped after a lapse of one minute. After a lapse of one minute, the additional 4 µl of water was sucked off, and the contact angle of the interface between the remaining water and the surface was measured after a lapse of another minute.

### Decomposition activity index

The methylene blue decomposition activity index, i.e., the decomposition activity index defined in JIS R1703-2 was determined.

### Determination of presence or absence of rear reaction

The surface of each sample was irradiated with black light of 7 mW/cm² for 168 hours. First, the surface was wiped with black cloth to check whether there is any chalking. Then, the surface was subjected to a cross-cut test using cellophane tape (trademark). If the test result indicated a favorable adhesion of 100/100, then it was determined that the rear reaction was "absent" in the sample. Conversely, if the surface showed any chalking or whitening of the coating film, and if the result of the cross-cut test using cellophane tape (trademark) for the surface indicated an adhesion below 100/100, then it was determined that the rear reaction was "present" in the sample.

### Measurement of self-cleaning effect

Test pieces of the samples were actually exposed to outdoor conditions for two months on a surface facing south with an inclination angle of 10° in the Sakai Senboku industrial district in Osaka prefecture, and the Lab color difference ΔE between the test pieces and unexposed pieces of the respective samples was measured. While no contamination is recognized by a usual visual inspection when the Lab color difference ΔE is 0.5 or less, contamination is usually recognized clearly when ΔE exceeds 3.0. Those samples having a ΔE exceeding 3.0 after exposure for two months under the above-described conditions have to be considered as having no self-cleaning effect.

### Antibacterial properties test

Tests for performing comparative evaluation of the antibacterial performance of photocatalyst products are prescribed in JIS R1702. Here, in accordance with these tests, Staphylococcus aureus was adopted, and the effect ΔR of the photocatalyst antibacterial products in light irradiation was determined from the change of the viable cell count before and after 8-hour light irradiation. In general, it is considered that the value of ΔR is preferably at least 2.0.

### NOₓ removal

A test for performing comparative evaluation of the NOₓ removal performance of photocatalyst products is prescribed in JIS R1701-1. Here, the amount of NOₓ decomposition was calculated substantially in accordance with this test. However, although the flow rate of the tested NOₓ gas would be 3.0 L/min if the above-described JIS was followed strictly, the test was carried out with a flow rate of 0.5 L/min. The test results are represented as the amount of decomposition in µmol. It is considered that the larger this value is, the better the NOₓ removal performance is.

### Test results (difference between the examples and the comparative examples)

Regarding the contact angle with water in a non-photoexcited state, the coating films of Examples 1 to 4, and Comparative Examples 1 and 2 had a stationary contact angle or a dynamic receding contact angle of not more than 30°, and the surface of the coating film was therefore confirmed to be hydrophilic in a non-photoexcited state. On the other hand, the coating films of Comparative Examples 3 and 4 had a dynamic receding contact angle that was far larger than 30°, and the surface of the coating film was therefore not confirmed to be hydrophilic in a non-photoexcited state.

The rear reaction was only confirmed in Comparative Example 3, and not confirmed in Examples 1 to 4 and Comparative Examples 1, 2 and 4.

The self-cleaning effect was confirmed in Examples 1 to 4 and Comparative Examples 1, and 2, and was not confirmed in Comparative Examples 3 and 4. The effect of Comparative Example 3 as a photocatalytic coating film seems to have been slightly reduced by the influence of the initial contamination resulting from the lack of hydrophilicity at the initial stage (non-photoexcited state). The reason that the self-cleaning effect of Comparative Example 4 was inferior seems to be that the hydrophilic coating film was not properly formed on the highly water repellent base material.

Further, the effects of the decomposition activity index, the antibacterial properties test and the NOₓ removal were confirmed in Examples 1 to 4 and Comparative Example 3, but not confirmed in Comparative Examples 1, 2 and 4.

Accordingly, the surfaces of the coating films of Examples 1 to 4 were hydrophilic in a non-photoexcited state, and also exhibited effects that are unique to photocatalysts (except for the hydrophilicity by photoexcitation action), such as self-cleaning effect, mildewproofing, deodorization, antibacterial properties and an air cleaning effect. Furthermore, Examples 1 to 4 did not cause the rear reaction. In addition, Comparative Example 3 provided the photocatalytic effects such as self-cleaning effect since it is a photocatalytic coating film using a conventional general persistent binder and a photocatalyst. However, Comparative Example 3 had a disadvantage in that the surface of the coating film was not hydrophilic in a non-photoexcited state, and that it caused the rear reaction.

### INDUSTRIAL APPLICABILITY

As described above, with the method for coating a building material according to the present invention, it is possible to provide a building material that has good hydrophilicity, excellent self-cleaning effect and anti-staining effect such that any soil adhered thereto can be washed off by rainwater and the like, as well as excellent mildewproofing, deodorization, antibacterial properties and air cleaning effect. Further, since the method for coating a building material according to the present invention will not cause a rear reaction by the photocatalyst of the coating film, it is not necessary to apply a barrier coat, which is a protective layer, as the underlying layer, thereby simplifying the manufacturing process. This makes it possible to manufacture the building material easily in a large quantity, and can reduce the manufacturing cost. Moreover, since the coating film on the base material surface exerts its hydrophilicity without being irradiated with light, it is possible to conduct the inspection for the presence or absence of hydrophilicity at the time of manufacture or shipment. At the same time, even if any fault such as partial damage to the surface coating film occurs, it is possible to apply the coating material in a simple manner for repair purpose.

## Claims

1. A method for coating a building material, comprising:
applying a coating material containing a hydrophilic polymer and a photocatalyst to a surface of the building material; and
drying the coating material to form a photocatalyst-containing coating film,
wherein the hydrophilic polymer is polytetrafluoroethylene obtained by graft polymerization of sulfonic acid,
the photocatalyst is a titania sol, or
the photocatalyst is selected from the group consisting of titanium oxide surface-coated with zeolite, titanium oxide surface-coated with silica, titanium oxide surface-coated with apatite, and mixtures of two or more thereof, and
the content of the photocatalyst in the coating film is 10 to 50 parts by mass in terms of titanium oxide per 100 parts by mass of the hydrophilic polymer, and
the coating film has a stationary contact angle or a dynamic receding contact angle of not more than 30° in a non-photoexcited state, and has a methylene blue decomposition activity index of at least 3.0.

2. The method for coating a building material according to claim 1,
wherein the coating material contains 0.01 to 5 mass% of a surfactant as an active ingredient.

3. The method for coating a building material according to any one of claims 1 or 2,
wherein the coating material contains 1 to 80 mass % of an alcohol.

4. A coating material containing a hydrophilic polymer and a photocatalyst,
wherein the hydrophilic polymer is polytetrafluoroethylene obtained by graft polymerization of sulfonic acid, and wherein the photocatalyst is a titania sol, or the photocatalyst is selected from the group consisting of titanium oxide surface-coated with zeolite, titanium oxide surface-coated with silica, titanium oxide surface-coated with apatite, and mixtures of two or more thereof.

5. The coating material of claim 4, wherein the coating material contains 0.01 to 5 mass% of a surfactant as an active ingredient.

6. The coating material of claim 4 or 5,
wherein the coating material contains 1 to 80 mass % of an alcohol.

7. A building material, which has been coated according to the method of one or more of claims 1-3 or which has been coated with a coating material according to one or more of claims 4-6.

## Patentansprüche

1. Verfahren zum Beschichten eines Baumaterials, wobei das Verfahren Folgendes umfasst:
- Aufbringen eines Beschichtungsmaterials, das ein hydrophiles Polymer und einen Fotokatalysator enthält, auf eine Oberfläche des Baumaterials; und
- Trocknen des Beschichtungsmaterials, um einen Fotokatalysator-haltigen Beschichtungsfilm zu bilden,
wobei das hydrophile Polymer Polytetrafluorethylen ist, das durch Pfropfpolymerisation von Sulfonsäure erhalten wurde, der Fotokatalysator ein Titandioxid-Sol ist, oder
der Fotokatalysator aus folgender Gruppe ausgewählt ist: Titanoxid, das mit Zeolit oberflächenbeschichtet ist, Titanoxid, das mit Siliziumdioxid oberflächenbeschichtet ist, Titanoxid, das mit Apatit oberflächenbeschichtet ist, und Gemischen aus zwei oder mehr von diesen, und
der Gehalt des Fotokatalysators in dem Beschichtungsfilm 10 bis 50 Masseteile in Bezug auf Titanoxid je 100 Masseteile des hydrophilen Polymers beträgt und
der Beschichtungsfilm einen stationären Kontaktwinkel oder einen dynamischen zurückweichenden Kontaktwinkel von maximal 30° in einem nicht-lichterregten Zustand hat und einen Methylenblau-Zersetzungsaktivitätsindex von mindestens 3,0 hat.

2. Verfahren zum Beschichten eines Baumaterials nach Anspruch 1, wobei das Beschichtungsmaterial 0,01 bis 5 Masse-% eines grenzflächenaktiven Stoffs als einen Wirkstoff enthält.

3. Verfahren zum Beschichten eines Baumaterials nach einem der Ansprüche 1 oder 2, wobei das Beschichtungsmaterial 1 bis 80 Masse-% eines Alkohols enthält.

4. Beschichtungsmaterial, das ein hydrophiles Polymer und einen Fotokatalysator enthält, wobei das hydrophile Polymer Polytetrafluorethylen ist, das durch Pfropfpolymerisation von Sulfonsäure erhalten wurde, und wobei der Fotokatalysator ein Titandioxid-Sol ist, oder der Fotokatalysator aus folgender Gruppe ausgewählt ist: Titanoxid, das mit Zeolit oberflächenbeschichtet ist, Titanoxid, das mit Siliziumdioxid oberflächenbeschichtet ist, Titanoxid, das mit Apatit oberflächenbeschichtet ist, und Gemischen aus zwei oder mehr von diesen.

5. Beschichtungsmaterial nach Anspruch 4, wobei das Beschichtungsmaterial 0,01 bis 5 Masse-% eines grenzflächenaktiven Stoffs als einen Wirkstoff enthält.

6. Beschichtungsmaterial nach Anspruch 4 oder 5, wobei das Beschichtungsmaterial 1 bis 80 Masse-% eines Alkohols enthält.

7. Baumaterial, das gemäß dem Verfahren nach einem oder mehreren der Ansprüche 1-3 beschichtet wurde oder das mit einem Beschichtungsmaterial nach einem oder mehreren der Ansprüche 4-6 beschichtet wurde.

## Revendications

1. Procédé de revêtement d'un matériau de construction, comprenant :
- l'application d'un matériau de revêtement contenant un polymère hydrophile et un photocatalyseur sur une surface du matériau de construction ; et
- le séchage du matériau de revêtement pour former un film de revêtement contenant un photocatalyseur,
dans lequel le polymère hydrophile est le polytétrafluoroéthylène obtenu par polymérisation par greffe de l'acide sulfonique,
le photocatalyseur est un sol de dioxyde de titane,
le photocatalyseur est choisi dans le groupe constitué par l'oxyde de titane revêtu en surface avec de la zéolite, l'oxyde de titane revêtu en surface avec de la silice, l'oxyde de titane revêtu en surface avec de l'apatite, et leurs mélanges de deux ou plus associés, et
la teneur du photocatalyseur dans le film de revêtement est de 10 à 50 parties en masse en termes d'oxyde de titane par 100 parties en masse du polymère hydrophile, et
le film de revêtement a un angle de contact stationnaire ou un angle de contact de recul dynamique de pas plus de 30° dans un état non photoexcité, et a un indice d'activité de décomposition du bleu de méthylène d'au moins 3,0.

2. Procédé de revêtement d'un matériau de construction selon la revendication 1, dans lequel le matériau de revêtement contient de 0,01 à 5 % en masse d'un tensioactif comme ingrédient actif.

3. Procédé de revêtement d'un matériau de construction selon l'une quelconque des revendications 1 ou 2, dans lequel le matériau de revêtement contient de 1 à 80 % en masse d'un alcool.

4. Matériau de revêtement contenant un polymère hydrophile et un photocatalyseur, dans lequel le polymère hydrophile est le polytétrafluoroéthylène obtenu par polymérisation par greffe de l'acide sulfonique, et dans lequel le photocatalyseur est un sol de dioxyde de titane, ou le photocatalyseur est choisi dans le groupe constitué par l'oxyde de titane revêtu en surface avec de la zéolite, l'oxyde de titane revêtu en surface avec de la silice, l'oxyde de titane revêtu en surface avec de l'apatite, et leurs mélanges de deux ou plus associés.

5. Matériau de revêtement selon la revendication 4, dans lequel le matériau de revêtement contient de 0,01 à 5 % en masse d'un tensioactif comme ingrédient actif.

6. Matériau de revêtement selon la revendication 4 ou 5, dans lequel le matériau de revêtement contient de 1 à 80 % en masse d'un alcool.

7. Matériau de construction, qui a été revêtu selon le procédé de l'une ou plusieurs des revendications 1 à 3 ou qui a été revêtu avec un matériau de revêtement selon une ou plusieurs des revendications 4 à 6.
